# EUROPÄISCHE PATENTSCHRIFT

(11) **EP 0 595 238 B1**
(45) Veröffentlichungstag und Bekanntmachung des Hinweises auf die Patenterteilung: **09.04.1997**
(21) Anmeldenummer: 93117275.3
(22) Anmeldetag: 25.10.1993
(51) Int. Cl.: G01G 3/14, G01G 19/18, G01G 13/00

(54) **Vorrichtung zum Beschicken einer Verarbeitungsmaschine, insbesondere einer Kunststoff-Schneckenpresse**
Device for feeding a processing machine, especially a plastics extruder
Dispositif pour alimenter une machine de traitement notamment une extrudeuse à vis

(30) Priorität: 28.10.1992 DE 4236374
(43) Veröffentlichungstag der Anmeldung: 04.05.1994
(73) Patentinhaber: Vollmar, Hartmut, D-53639 Königswinter (DE)
(72) Erfinder: Vollmar, Hartmut, D-53639 Königswinter (DE)
(74) Vertreter: Honke, Manfred, Dr.-Ing.

(56) Entgegenhaltungen:
- EP-A- 0 422 288
- EP-B- 0 246 289
- GB-A- 2 180 357
- CONTROL AND INSTRUMENTATION, Bd. 22, Nr. 10, Oktober 1990, London GB, Seite 75-77-79, XP165377; M. RADFORD : 'Practical Load Cell Techniques'

## Beschreibung

Die Erfindung betrifft eine Vorrichtung zum Beschicken einer Verarbeitungsmaschine, insbesondere einer Kunststoff-Schneckenpresse, mit feinteiligem oder körnigem Beschickgut, - mit einem Vorrichtungsgestell, zumindest einer an dem Vorrichtungsgestell befestigten Wiegezelle und einem mit der Wiegezelle verbundenem, um eine vertikale Achse symmetrischen, trichterförmigen Wiegebehälter, dem ein oberer Beschickgutzulauf zugeordnet ist und der einen trichtermittigen Abzugstutzen aufweist, wobei das Vorrichtungsgestell auf die Verarbeitungsmaschine aufgesetzt ist. - In den Wiegebehälter wird das Beschickgut batchweise eingewogen. Es wird aus dem Wiegebehälter nach Maßgabe des Beschickgutbedarfs der Verarbeitungsmaschine kontinuierlich, gegebenenfalls auch mit Hilfe von Förderschnecken abgezogen. Die Verarbeitungsmaschine besitzt eine Vorrichtung des beschriebenen Aufbaus oder deren mehrere, die zu einem Dosierapparat für unterschiedliches Beschickgut zusammengefaßt sind und auf einem Mischtrichter oder dergleichen arbeiten.

Bei der aus der Praxis bekannten Vorrichtung, von der die Erfindung ausgeht, ist der Wiegebehälter an eine oder an mehrere Wiegezellen angeschlossen, wobei die Wiegezelle bzw. die Wiegezellen ihrerseits mit dem Vorrichtungsgestell in Verbindung stehen. Die Meßwerte der Wiegezellen werden elektrisch abgenommen und elektronisch ausgewertet. Die insoweit der modernen Meßtechnik entsprechende Meßgenauigkeit kann bei der bekannten Vorrichtung nicht voll ausgenutzt werden. Das beruht, wie die Erfindung erkannt hat, auf mechanischen Zwängen, die aus der Verbindung des Wiegebehälters mit dem Vorrichtungsgestell resultieren. Die Wiegegenauigkeit ist daher bei den bekannten Vorrichtungen verbesserungsbedürftig. Sie wird häufig auch durch Vibrationen gestört, die von der arbeitenden Verarbeitungsmaschine ausgehen.

Der Erfindung liegt die Aufgabe zugrunde, bei einer Vorrichtung des eingangs beschriebenen Aufbaus sowie der eingangs beschriebenen Zweckbestimmung die Wiegegenauigkeit zu verbessern.

Zur Lösung dieser Aufgabe lehrt die Erfindung, ausgehend von der eingangs beschriebenen Vorrichtung, daß das Vorrichtungsgestell eine obere Montageplatte aufweist, an die unterseitig über Gummipuffer ein Wiegezellenträger angeschlossen ist, von dem die Wiegezelle vorkragt, daß an der Wiegezelle eine kreisbogenförmige oder kreisförmige Aufhängeeinrichtung für den Wiegebehälter befestigt ist und daß an der Aufhängeeinrichtung über an der Aufhängeeinrichtung angeordnete Kugelpfannengelenke sowie daran und an den Randbereich des Wiegebehälters angeschlossene Zugmittel der Wiegebehälter austariert hängend befestigt ist, wobei der obere Beschickgutzulauf in der geometrischen Achse des Wiegebehälters angeordnet ist. Im Rahmen der Erfindung kann mit handelsüblichen Wiegezellen mit elektrischer Meßwertaufnahme gearbeitet werden, die auf ein Biegemoment reagieren. Bei der erfindungsgemäßen Vorrichtung wirken die Gummipuffer vibrationsdämpfend. Sie können zu diesem Zweck als vibrationsdämpfende Gummimetallelemente ausgeführt sein. Es empfiehlt sich, drei nach Maßgabe eines Dreiecks, vorzugsweise eines gleichseitigen Dreiecks, angeordnete Gummipuffer oder Gummimetallelemente vorzusehen. Folglich wird der Wiegevorgang durch Vibrationen, die von der arbeitenden Verarbeitungsmaschine ausgehen, nicht mehr gestört. Im übrigen führt die erfindungsgemäße Anordnung und Auslegung dazu, daß das Beschickgut in dem Wiegebehälter einen in bezug auf die Achse des Wiegebehälters symmetrischen Schüttkegel ausbildet, was für die Wiegegenauigkeit von großer Bedeutung ist. Die Meßgenauigkeit der Elemente der elektrischen Wiegeeinrichtung an sich und für sich kann folglich voll ausgenutzt werden.

Im einzelnen bestehen im Rahmen der Erfindung mehrere Möglichkeiten der weiteren Ausbildung und Gestaltung. So sind nach bevorzugter Ausführungsform der Erfindung die Montageplatte und der Wiegezellenträger horizontal angeordnet. Im übrigen ist nach bevorzugter Ausführungsform der Erfindung die Wiegezelle mit im unbelasteten Zustand horizontaler Achse montiert.

Bei der erfindungsgemäßen Vorrichtung kann die Aufhängeeinrichtung mit einem Kreisring ausgerüstet sein und der Kreisring kann drei über den Umfang äquidistant verteilte Kugelpfannengelenke und daran angeschlossene Zugmittel aufweisen. Das führt zu einer statisch bestimmten Aufhängung des Wiegebehälters und zu den daraus resultierenden Vorteilen in bezug auf den Meßvorgang. Es besteht aber auch die Möglichkeit, die Aufhängeeinrichtung mit einem Halbring auszurüsten und den Halbring an den Halbringenden jeweils mit einem Kugelpfannengelenk und daran angeschlossenen Zugmitteln zu versehen. Bei dieser Ausführungsform erfährt der Wiegebehälter eine Schräglage, wenn sich ein in bezug auf die Achse des Wiegebehälters unsymmetrischer Schüttkegel ausbilden sollte. Folglich kann in diesem Falle nach Maßgabe der Orientierung des Wiegebehälters in bezug auf die Tarierung korrigierend eingewirkt werden.

Erfindungsgemäß ist die Wiegezelle im Anschlußbereich der Aufhängeeinrichtung zweckmäßigerweise mit einer Überlastsicherung versehen und ist sie mit dieser auch beim Transport festsetzbar. Die Überlastsicherung besteht nach bevorzugter Ausführungsform aus einem Kragarm, der von dem Wiegezellenträger vorkragt und an dem die Wiegezelle über einen Sicherungsbolzen mit einstellbarem Spiel sowie festsetzbar angeschlossen ist. Der Wiegebehälter kann einmal bei der Montage austariert worden sein. Es besteht aber auch die Möglichkeit, die Anordnung so zu treffen, daß der Wiegebehälter mit Hilfe der Zugmittel und von deren Befestigungselementen austarierbar an die Aufhängeeinrichtung angeschlossen ist, so daß im montierten Zustand ein Austarieren erfolgen kann. Die Zugmittel sind zweckmäßigerweise als dehnungsarme Seilzüge ausgeführt.

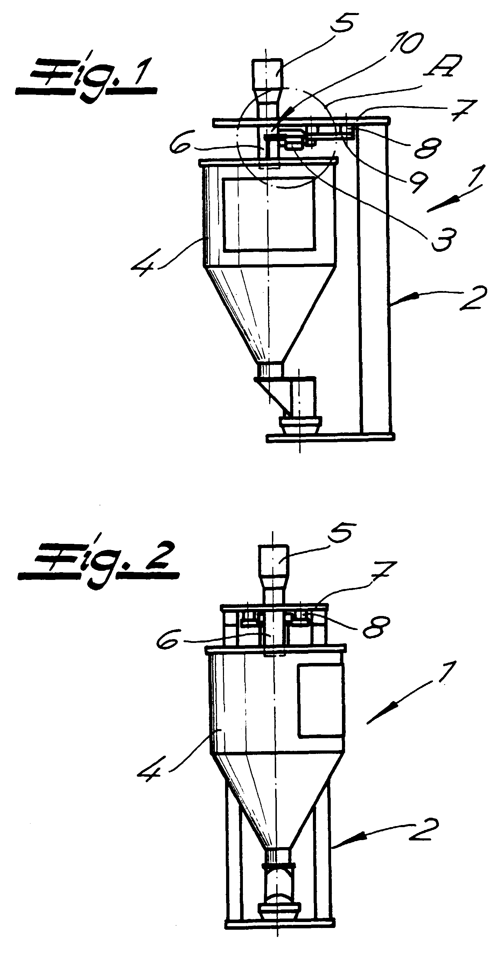

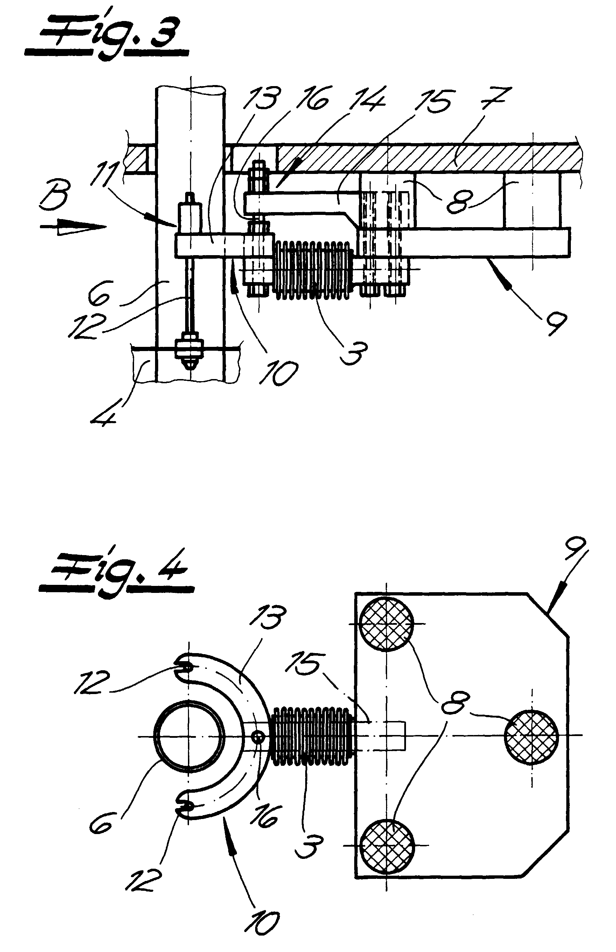

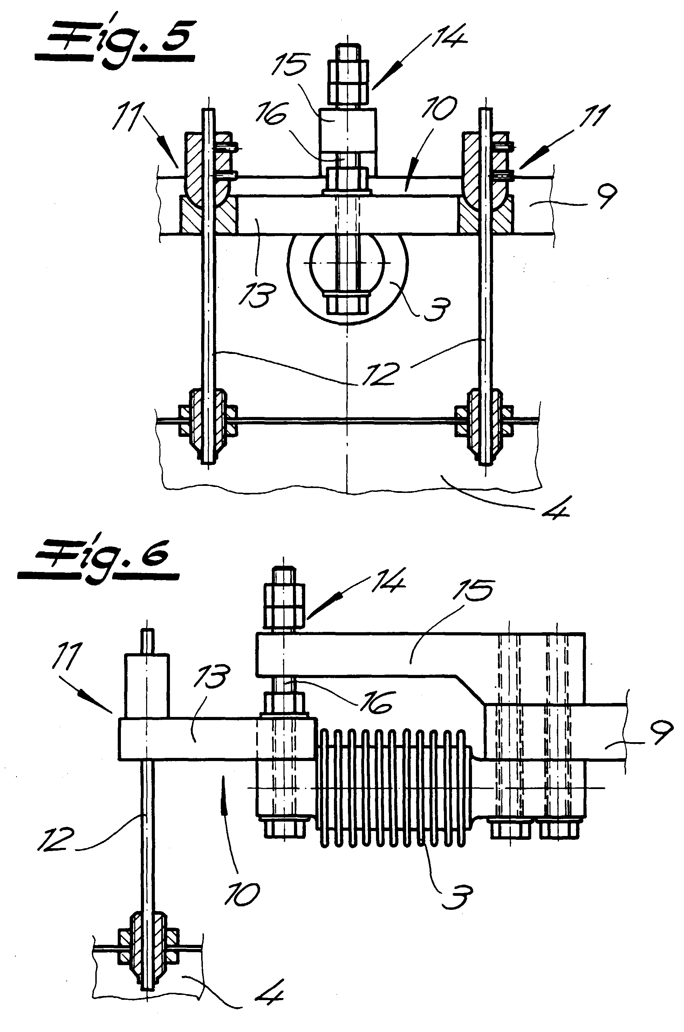

Im folgenden wird die Erfindung anhand einer lediglich ein Ausführungsbeispiel darstellenden Zeichnung ausführlicher erläutert. Es zeigen in schematischer Darstellung
- Fig. 1: eine Seitenansicht einer erfindungsgemäßen Vorrichtung,
- Fig. 2: die Frontansicht des Gegenstandes der Fig. 1,
- Fig. 3: den vergrößerten Ausschnitt A aus dem Gegenstand der Fig. 1, teilweise im Schnitt,
- Fig. 4: eine Draufsicht auf den Gegenstand der Fig. 3 bei entfernter Montageplatte,
- Fig. 5: in gegenüber den Fig. 3 und 4 vergrößertem Maßstab eine Ansicht des Gegenstandes der Fig. 3 aus Richtung des Pfeiles B, und
- Fig. 6: eine Seitenansicht des Gegenstandes der Fig. 5.

Die in den Figuren dargestellte Vorrichtung 1 dient zum Beschicken einer Verarbeitungsmaschine, insbesondere einer Kunststoff-Schneckenpresse mit feinteiligem oder königem Beschickgut. Die Verarbeitungsmaschine schließt sich in Richtung des Pfeiles 1 an die Vorrichtung an.

Zur Vorrichtung 1 gehören im grundsätzlichen Aufbau ein Vorrichtungsgestell 2, zumindest eine an dem Vorrichtungsgestell 2 befestigte Wiegezelle 3 und ein mit der Wiegezelle 3 verbundener, um eine vertikale Achse symmetrischer, trichterförmiger Wiegebehälter 4. Dem Wiegebehälter 4 ist ein oberer Beschickgutzulauf 5 zugeordnet, er weist einen trichtermittigen Abzugstutzen 6 auf. Das Vorrichtungsgestell 2 ist im montierten Zustand der Vorrichtung 1 auf die Verarbeitungsmaschine aufgesetzt, was nicht gezeichnet wurde. Insbesondere aus den Fig. 3, 5 und 6 entnimmt man, daß das Vorrichtungsgestell 2 eine obere Montageplatte 7 aufweist, an die unterseitig über Gummipuffer 8 ein Wiegezellenträger 9 angeschlossen ist, von dem die Wiegezelle 3 vorkragt. An die Wiegezelle 3 ist eine kreisbogenförmige Aufhängeeinrichtung 10 für den Wiegebehälter 4 angeschlossen. An der Aufhängeeinrichtung 10 ist der Wiegebehälter 4 austariert hängend befestigt. Das geschieht über an der Aufhängeeinrichtung 10 angeordnete Kugelpfannengelenke 11 sowie daran und an den Randbereich des Wiegebehälters 4 angeschlossene Zugmittel 12. Der obere Beschickgutzulauf 5 ist koaxial zur Achse des Wiegebehälters 4 angeordnet. Die Anordnung der Gummipuffer 8 erkennt man insbesondere in der Fig. 4. Es mag sich um Gummipuffer 8 handeln, die als vibrationsdämpfende Gummimetallelemente ausgeführt sind. Im unbelasteten Zustand ist die Wiegezelle 3 mit horizontaler Achse angeordnet.

Im Ausführungsbeispiel und nach bevorzugter Ausführungsform der Erfindung ist die Aufhängeeinrichtung 10 mit einem Halbring 13 ausgerüstet. Der Halbring 13 weist an den Halbringenden jeweils ein Kugelpfannengelenk 11 und daran angeschlossen ein Zugmittel 12 auf. Es könnte anstelle des Halbringes aber auch ein Kreisring vorgesehen sein, wobei man über die Kugelpfannengelenke 11 und die Zugmittel 12 eine statisch bestimmte Aufhängung des Wiegebehälters 4 vornehmen könnte.

In der Fig. 6 erkennt man weitere Einzelheiten der Aufhängung. Insbesondere ist erkennbar, daß die Wiegezelle 3 im Anschlußbereich der Aufhängeeinrichtung 10 eine Überlastsicherung 14 aufweist. Sie ist mit dieser auch beim Transport festsetzbar. Die Überlastsicherung 14 besteht aus einem Kragarm 15, der an den Wiegezellenträger 9 angeschlossen ist und über diesen vorkragt. An den Kragarm 15 ist die Wiegezelle 3 über einen Sicherungsbolzen 16 mit einstellbarem Spiel und festsetzbar angeschlossen. Die Fig. 5 läßt erkennen, daß der Wiegebehälter 4 mit Hilfe der Zugmittel 12 und von deren Befestigungselementen austarierbar an die Aufhängeeinrichtung 10 angeschlossen ist. Die Zugmittel 12 sind als dehnungsarme Seilzüge ausgeführt.

## Patentansprüche

1. Vorrichtung zum Beschicken einer Verarbeitungsmaschine, insbesondere einer Kunststoff-Schneckenpresse, mit feinteiligem oder körnigem Beschickgut, - mit
einem Vorrichtungsgestell (2),
zumindest einer an dem Vorrichtungsgestell befestigten Wiegezelle (3) und
einem mit der Wiegezelle verbundenen, um eine vertikale Achse symmetrischen, trichterförmigen Wiegebehälter (4), dem ein oberer Beschickgutzulauf (5) zugeordnet ist und der einen trichtermittigen Abzugstutzen (6) aufweist,
wobei das Vorrichtungsgestell (2) auf die Verarbeitungsmaschine aufgesetzt ist, **dadurch gekennzeichnet**, daß das Vorrichtungsgestell (2) eine obere Montageplatte (7) aufweist, an die unterseitig über Gummipuffer (8) ein Wiegezellenträger (9) angeschlossen ist, von dem die Wiegezelle (3) vorkragt, daß an der Wiegezelle (3) eine kreisbogenförmige oder kreisförmige Aufhängeeinrichtung (10) für den Wiegebehälter (4) befestigt ist und daß an der Aufhängeeinrichtung (10) über an der Aufhängeeinrichtung (10) angeordnete Kugelpfannengelenke (11) sowie daran und an den Randbereich des Wiegebehälters (4) angeschlossene Zugmittel (12) der Wiegebehälter (4) austariert hängend befestigt ist, wobei der obere Beschickgutzulauf (5) in der geometrischen Achse des Wiegebehälters (4) angeordnet ist.

2. Vorrichtung nach Anspruch 1, dadurch gekennzeichnet, daß die Gummipuffer (8) als vibrationsdämpfende Gummimetallelemente ausgeführt sind.

3. Vorrichtung nach einem der Ansprüche 1 oder 2, dadurch gekennzeichnet, daß die Montageplatte (7) und der Wiegezellenträger (9) horizontal angeordnet sind.

4. Vorrichtung nach der einem der Ansprüche 1 bis 3, dadurch gekennzeichnet, daß die Wiegezelle (3) mit im unbelasteten Zustand horizontaler Achse angeordnet ist.

5. Vorrichtung nach einem der Ansprüche 1 bis 4, dadurch gekennzeichnet, daß die Aufhängeeinrichtung (10) mit einem Kreisring ausgerüstet ist und der Kreisring drei über den Umfang äquidistant verteilte Kugelpfannengelenke (11) und daran angeschlossene Zugmittel (12) aufweist.

6. Vorrichtung nach einem der Ansprüche 1 bis 4, dadurch gekennzeichnet, daß die Aufhängeeinrichtung mit einem Halbring (13) ausgerüstet ist und der Halbring (13) an den Halbringenden jeweils ein Kugelpfannengelenk (11) und daran angeschlossene Zugmittel (12) aufweist.

7. Vorrichtung nach einem der Ansprüche 1 bis 6, dadurch gekennzeichnet, daß die Wiegezelle (3) im Anschlußbereich der Aufhängeeinrichtung (10) eine Überlastsicherung (14) aufweist und mit dieser auch beim Transport festsetzbar ist.

8. Vorrichtung nach Anspruch 7, dadurch gekennzeichnet, daß die Überlastsicherung (14) aus einem Kragarm (15) besteht, der von dem Wiegezellenträger (9) vorkragt und an den die Wiegezelle (3) über einen Sicherungsbolzen (16) mit einstellbarem Spiel und festsetzbar angeschlossen ist.

9. Vorrichtung nach einem der Ansprüche 1 bis 8, dadurch gekennzeichnet, daß der Wiegebehälter (4) mit Hilfe der Zugmittel (12) und deren Befestigungselemente austarierbar an die Aufhängeeinrichtung (10) angeschlossen ist.

10. Vorrichtung nach einem der Ansprüche 1 bis 9, dadurch gekennzeichnet, daß die Zugmittel (13) als dehnungsarme Seilzüge ausgeführt sind.

## Claims

1. A device for feeding a processing machine, particularly a plastics worm extruder, with finely divided or granular feed material, - having
a device stand (2)
at least one weighing cell (3) fixed to the device stand, and
a hopper-shaped weighing vessel (4), which is symmetrical about a vertical axis, and is attached to the weighing cell, and with which an upper feed material inlet (5) is associated and which has a discharge connection piece (6) in the centre of the hopper,
wherein the device stand (2) is placed on the processing machine, characterised in that the device stand (2) comprises an upper mounting plate (7), to the underside of which a weighing cell support (9) from which the weighing cell (3) projects is attached via rubber buffers (8), that a suspension device (10), which is in the shape of a circular arc or is circular, for the weighing vessel (4) is fixed to the weighing cell (3), and that the weighing vessel (4) is fixed, suspended and tared, to the suspension device (10) via ball and socket joints (11) disposed on the suspension device (10) and via tension means (12) attached to the ball and socket joints and to the edge region of the weighing vessel (4), wherein the upper feed material inlet (5) is disposed on the geometric axis of the weighing vessel (4).

2. A device according to claim 1, characterised in that the rubber buffers (8) are constructed as rubber-metal elements which have a vibration-damping effect.

3. A device according to either one of claims 1 or 2, characterised in that the mounting plate (7) and the weighing cell support (9) are disposed horizontally.

4. A device according to any one of claims I to 3, characterised in that in its unloaded state the weighing cell (3) is disposed with its axis horizontal.

5. A device according to any one of claims 1 to 4, characterised in that the suspension device (10) is equipped with a circular ring, and the circular ring has three ball and socket joints (11) and tension means (12) attached thereto equidistantly distributed over its circumference.

6. A device according to any one of claims 1 to 4, characterised in that the suspension device is equipped with a half ring (13), and the half ring (13) has a ball and socket joint (11) and tension means (12) attached thereto at each of its half ring ends.

7. A device according to any one of claims 1 to 6, characterised in that the weighing cell (3) has an overload protection device (14) in its region of connection with the suspension device (10) and can also be fixed by means of the overload protection device during transport.

8. A device according to claim 7, characterised in that the overload protection device (14) consists of a boom (15) which protrudes from the weighing cell support (9) and is attached, with adjustable free motion and so that it can be fixed, to the weighing cell (3) via a locking bolt (16).

9. A device according to any one of claims 1 to 8, characterised in that the weighing vessel (4) is attached to the suspension device (10) so that it can be tared, with the aid of the tension means (12) and their fixing elements.

10. A device according to any one of claims 1 to 9, characterised in that the tension means (13) are constructed as cable pulls with limited extensibility.

## Revendications

1. Dispositif de chargement d'une machine de traitement, en particulier d'une extrudeuse de matière plastique, avec des matières de chargement à grain fin ou granulées, comprenant un bâti de dispositif (2), au moins une cellule de pesage (3) fixée sur le bâti de dispositif, et un récipient de pesage (4) en forme d'entonnoir couplé avec la cellule de pesage et symétrique par rapport à un axe vertical, auquel est associée une arrivée de matières de chargement (5) et qui comporte une tubulure de soutirage (6) au centre de l'entonnoir, le bâti de dispositif (2) étant mis en place, sur la machine de traitement, **caractérisé en ce** que le bâti de dispositif (2) comporte une plaque de montage supérieure (7) à la surface inférieure de laquelle est raccordé, par l'intermédiaire de tampons en caoutchouc (8), un support de cellule de pesage (9) duquel dépasse la cellule de pesage (3), que sur la cellule de pesage (3) est fixé un dispositif de suspension (10) en arc de cercle ou de forme circulaire pour le récipient de pesage (4), et que le récipient de pesage (4) taré est suspendu au dispositif de suspension (10) par l'intermédiaire d'articulations à coussinets sphériques (11) montées sur le dispositif de suspension (10), et de moyens de traction (12) rattachés à celles-ci ainsi qu'à la zone périphérique du récipient de pesage (4), l'arrivée de matières de chargement supérieure (5) étant disposée dans l'axe géométrique du récipient de pesage (4).

2. Dispositif selon la revendication 1, caractérisé en ce que les tampons en caoutchouc (8) sont réalisés sous la forme d'éléments de caoutchouc-métal antivibratiles.

3. Dispositif selon la revendication 1 ou 2, caractérisé en ce que la plaque de montage (7) et le support de cellule de pesage (9) sont orientés dans le sens horizontal.

4. Dispositif selon l'une des revendications 1 à 3, caractérisé en ce que la cellule de pesage (3) est montée de manière qu'à l'état non chargé son axe est orienté horizontalement.

5. Dispositif selon l'une des revendications 1 à 4, caractérisé en ce que le dispositif de suspension (10) est équipé d'un anneau de cercle et que l'anneau de cercle comporte trois articulations à coussinets sphériques (11) réparties à des distances égales sur la périphérie, et des moyens de traction (12) rattachés à celles-ci.

6. Dispositif selon l'une des revendications 1 à 4, caractérisé en ce que le dispositif de suspension est équipé d'un demi-anneau (13) et que le demi-anneau (13) porte à chacune de ses extrémités une articulation à coussinet sphérique (11) à laquelle est rattaché à chaque fois un moyen de traction (12).

7. Dispositif selon l'une des revendications 1 à 6, caractérisé en ce que la cellule de pesage (3) présente dans la région du raccordement du dispositif de suspension (10), une protection contre les surcharges (14) par laquelle elle peut également être bloquée pendant le transport.

8. Dispositif selon la revendication 7, caractérisé en ce que la protection contre les surcharges (14) est constituée par un bras en porte à faux (15) qui dépasse du support de cellule de pesage (9) et auquel la cellule de pesage (3) est rattachée, avec jeu réglable et possibilité de blocage, par l'intermédiaire d'un axe de blocage (16).

9. Dispositif selon l'une des revendications 1 à 8, caractérisé en ce que le récipient de pesage (4) est rattaché au dispositif de suspension (10) de manière à pouvoir être taré à l'aide des moyens de traction (12) et des éléments de fixation de ceux-ci.

10. Dispositif selon l'une des revendications 1 à 9, caractérisé en ce que les moyens de traction (13) sont réalisés sous la forme de câbles de transmission à extensibilité réduite.
